# FASCICULE DE BREVET EUROPEEN

(11) **EP 1 947 823 B1**
(45) Date de publication et mention de la délivrance du brevet: **18.04.2012**
(21) Numéro de dépôt: 07305002.3
(22) Date de dépôt: 21.12.2007
(51) Int. Cl.: H04W 80/04

(54) **Procédé de collaboration entre un routeur mobile et au moins un autre routeur mobile, lesdits routeurs mobiles etant coordonnes en deplacement**
Kollaborationsverfahren zwischen einem mobilen Router und mindestens einem anderen mobilen Router, wobei diese mobilen Router beim Bewegen koordiniert sind
Method for collaboration between a mobile router and at least one other mobile router, said mobile routers having coordinated movement

(30) Priorité: 16.01.2007 FR 0752712
(43) Date de publication de la demande: 23.07.2008
(73) Titulaire: FRANCE TELECOM, 75015 Paris (FR)
(72) Inventeur: Klamm, Frédéric, 14530, LUC SUR MER (FR); Binet, David, 14550, BLAINVILLE SUR ORNE (FR); Gaabab, Brahim, 31100, TOULOUSE (FR)

(56) Documents cités:
- EP-A- 1 578 067
- TSUKADA R KUNTZ T ERNST KEIO UNIVERSITY / WIDE M: "Analysis of Multiple Mobile Routers Cooperation" IETF STANDARD-WORKING-DRAFT, INTERNET ENGINEERING TASK FORCE, IETF, CH, 17 octobre 2005 (2005-10-17), XP015043118 ISSN: 0000-0004
- RYU N CHOI SEOUL NATIONAL UNIVERSITY E PAIK KT T KWON C PARK SEOUL NATIONAL UNIVERSITY J: "Failover for Multiple Mobile Routers in a Mobile Network" IETF STANDARD-WORKING-DRAFT, INTERNET ENGINEERING TASK FORCE, IETF, CH, no. 2, 22 octobre 2006 (2006-10-22), XP015048483 ISSN: 0000-0004
- TSUKADA, ERNST WAKIKAWA, MITSUYA: "Dynamic management of multiple mobile routers" IEEE PUBLICATION, 18 novembre 2005 (2005-11-18), pages 1108-1113, XP002448726
- EUN KYOUNG PAIK ET AL: "Load sharing and session preservation with multiple mobile routers for large scale network mobility" ADVANCED INFORMATION NETWORKING AND APPLICATIONS, 2004. AINA 2004. 18TH INTERNATIONAL CONFERENCE ON FUKUOKA, JAPAN 29-31 MARCH 2004, PISCATAWAY, NJ, USA,IEEE, vol. 1, 29 mars 2004 (2004-03-29), pages 393-398, XP010695449 ISBN: 0-7695-2051-0
- NG PANASONIC SINGAPORE LABS E PAIK KT T ERNST WIDE AT KEIO UNIVERSITY C: "Analysis of Multihoming in Network Mobility Support" IETF STANDARD-WORKING-DRAFT, INTERNET ENGINEERING TASK FORCE, IETF, CH, vol. nemo, no. 1, 25 octobre 2004 (2004-10-25), XP015024112 ISSN: 0000-0004
- SEONGHO CHO JONGKEUN NA CHONGKWON KIM SEOUL NATIONAL UNIVERSITY SUNGJIN LEE HYUNJUNG KANG CHANGHOI KOO SAMSUNG ELECTRONICS: "Neighbor MR Authentication and Registration Mechanism in Multihomed Mobile Networks" IETF STANDARD-WORKING-DRAFT, INTERNET ENGINEERING TASK FORCE, IETF, CH, avril 2004 (2004-04), XP015011762 ISSN: 0000-0004

## Description

L'invention concerne une technique de collaboration entre un routeur mobile et au moins un autre routeur mobile, lesdits routeurs mobiles étant coordonnés en déplacement, pour optimiser la connexion de l'autre routeur à au moins un réseau d'accès.

On se place ici dans le cadre de la gestion de mobilité IP de réseaux. Par la suite, on considérera que des réseaux mobiles sont des réseaux ayant pour particularité d'être connectés à un réseau IP, par exemple l'Internet, via un ou plusieurs routeurs, appelés routeurs mobiles, aptes à changer leurs points d'ancrage dans la topologie du réseau IP. Il s'agit par exemple de routeurs mobiles déployés dans des transports publics pour des passagers ou de réseaux de capteurs embarqués dans des véhicules. Le protocole Mobile IP, appelé MIP, permet de gérer une mobilité d'un noeud IP mobile, encore appelé Mobile Node ou MN, depuis un point d'accès d'un sous-réseau IP d'origine vers un point d'accès d'un autre sous-réseau IP, appelé réseau visité, au cours d'un déplacement du noeud. Tout noeud IP a une adresse permanente, HoA pour "Home Adress" en anglais, dans son réseau IP d'origine, appelé également réseau mère. Lorsqu'un noeud se déplace vers un réseau visité, il acquiert une adresse temporaire dans ce réseau visité, cette adresse étant classiquement appelée CoA pour "Care-of-Address". Le noeud mobile MN indique cette adresse temporaire à un équipement référent désigné dans son réseau IP d'origine pour gérer la mobilité IP. Un tel équipement est appelé classiquement un agent mère ou "Home Agent" en anglais, ou encore HA. De cette façon, cet agent mère lie l'adresse permanente HoA dans le réseau d'origine et l'adresse temporaire CoA dans le réseau visité.

Le noeud mobile MN est soit un terminal IP, soit un routeur mobile MR accueillant des terminaux. Dans ce dernier cas, le protocole MIP est remplacé par le protocole NEMO, qui est une extension de MIP pour les routeurs mobiles. On se place ici dans le cas d'une pluralité de routeurs mobiles appartenant à un réseau mobile et coordonnés en déplacement. Il s'agit par exemple de routeurs mobiles installés dans un moyen de transport tel qu'un train. Ces routeurs mobiles sont aptes à détecter des points d'accès sans fil. Ces points d'accès sans fil peuvent appartenir à un même réseau d'accès IP ou non. Par la suite, on appelle "transfert inter-point d'accès" un changement de point d'accès sans fil dans le même réseau d'accès IP et "transfert inter-réseau d'accès" quand le routeur mobile change de point d'accès, le nouveau point d'accès appartenant à un réseau d'accès IP différent. Pour ce dernier type de transfert, le routeur mobile doit effectuer un premier transfert inter-point d'accès entre un point d'accès d'un premier réseau d'accès et un nouveau point d'accès d'un nouveau réseau d'accès puis ensuite acquérir le groupe d'adresses réseau, ou préfixe IP, utilisé sur ce nouveau réseau d'accès et s'enregistrer sous une adresse temporaire appartenant à ce groupe d'adresses réseau auprès de son équipement référent. Ces actions lui permettent d'établir une connexion avec le réseau IP par l'intermédiaire du nouveau point d'accès. Pour les deux types de transfert, le déclenchement s'effectue en fonction de critères propres au routeur mobile.

L'article de M. Tsukada, R. Kuntz et T. Ernst intitulé "Analysis of Multiple Mobile Routers Cooperation" (draft Internet du NEMO Working Group de l'IETF XP015043118, 17 octobre 2005) propose diverses formes de coopération entre plusieurs routeurs mobiles dans le contexte du protocole NEMO en IPv6. Il préconise en particulier que les routeurs mobiles se tiennent mutuellement informés de leurs états de connexion respectifs avec le réseau Internet ; plus précisément, il préconise que les routeurs mobiles échangent des informations sur la qualité (bande passante, rapport signal sur bruit, et ainsi de suite) des réseaux d'accès utilisables par ces routeurs mobiles.

L'article intitulé "CoMoRoHo: Coopérative Mobile Router-based Handover Scheme for Long-Vehicular Multihomed Networks" de V.P. Kafle et al., publié en octobre 2006 dans la revue IECE Trans. Commun., vol. E89-B, NO. 10, propose un procédé permettant, lors du transfert de réseau d'accès d'un premier routeur, celui-ci étant coordonné en déplacement avec au moins un deuxième routeur mobile, de réduire l'impact de ce transfert de réseau d'accès sur la réception de paquets en cours, c'est-à-dire réduire le nombre de paquets perdus lors du transfert de réseau d'accès. Les deux routeurs coopèrent pour effectuer ce transfert : le deuxième routeur sert de relais pour l'acheminement des paquets à destination du premier routeur pendant l'exécution par ce dernier du transfert inter-réseau d'accès. Ils coopèrent également en ce que le premier routeur relaie au deuxième routeur un message "Router Advertisement" reçu du nouveau réseau d'accès notifiant des informations relatives au groupe d'adresses réseau, ou préfixe IP, utilisées sur ce nouveau réseau d'accès. Ce relais d'informations du premier routeur mobile vers le deuxième routeur mobile permet au deuxième routeur mobile de s'allouer une nouvelle adresse temporaire sur le nouveau réseau d'accès préalablement à son propre transfert vers ce nouveau réseau d'accès. Ainsi, par le relais de ce message, le deuxième routeur est implicitement informé de la connexion du premier routeur mobile à un point d'accès appartenant au nouveau réseau d'accès et le deuxième routeur va obligatoirement se connecter au nouveau réseau d'accès, par attachement au même point d'accès que celui auquel le premier routeur s'est attaché. Or, le relais de ce message vers le deuxième routeur intervient alors même que le premier routeur ne possède encore que peu d'informations sur le nouveau point d'accès. Par exemple, la connexion radio au point d'accès sans fil peut être de qualité médiocre, ou bien, la couverture radio du point d'accès peu étendue.

Il existe donc un besoin d'une technique permettant à un routeur mobile coordonné en déplacement avec un autre routeur mobile d'éviter de se connecter de façon aveugle à un nouveau point d'accès.

L'invention est défini par l'objet des revendications indépendantes et répond à ce besoin en proposant un procédé de collaboration entre un routeur mobile et au moins un autre routeur mobile, lesdits routeurs mobiles étant coordonnés en déplacement, pour optimiser la connexion de l'autre routeur à au moins un réseau d'accès, ledit procédé comprenant l'envoi audit autre routeur par ledit routeur d'une pluralité de notifications respectivement relatives à des événements successifs détectés par ledit routeur et relatifs audit au moins un réseau d'accès, une notification relative à un événement détecté donné comprenant des informations représentatives dudit évènement détecté et des informations représentatives d'un comportement dudit routeur face à cet évènement.

Ainsi, les messages de notification se suivent dans le temps pour tenir informé l'autre routeur mobile coordonné en déplacement. Ces messages et leur contenu aident l'autre routeur mobile à prendre une décision pour l'optimisation des connexions à un réseau d'accès.

Du fait de l'envoi de notifications successives, l'autre routeur mobile partage les informations que possède le routeur mobile. Si le routeur mobile est le premier d'une chaîne d'au moins un autre routeur mobile coordonné en déplacement, il va, par exemple, informer par des notifications successives l'autre routeur mobile de la détection d'un nouveau point d'accès, puis de sa propre sélection de cet autre point d'accès pour établir une connexion, de la détection d'un nouveau réseau d'accès et de l'établissement de la connexion à ce nouveau réseau d'accès, etc. L'autre routeur mobile bénéficie d'un suivi au fil du temps de l'évolution de la connexion du premier routeur mobile et peut ainsi éviter de se connecter de façon aveugle à un nouveau point d'accès.

Si les évènements et comportements du premier routeur face à l'évènement successifs notifiés ont été par exemple, détection d'un nouveau point d'accès, sélection de ce point d'accès pour établir une connexion, puis déconnexion du point d'accès, l'autre routeur peut utiliser ces informations afin d'éviter de se connecter à ce point d'accès le cas échéant. En effet, la qualité de connexion sur ce point d'accès peut être mauvaise et avoir justifié la déconnexion du premier routeur mobile. L'autre routeur mobile ne va pas reproduire les mauvais choix de connexion de l'autre routeur. Si les évènements et comportements du premier routeur face aux évènements successifs notifiés ont été par exemple détection d'un nouveau point d'accès, sélection de ce point d'accès pour établir une connexion, l'autre routeur peut utiliser ces informations pour éviter de se connecter de façon aveugle au nouveau point d'accès. L'utilisation des informations notifiées est immédiate si le besoin d'un transfert vers un autre point d'accès ou un autre réseau d'accès existe déjà. Dans ce cas, pour prendre sa décision de transfert, il prend en compte l'expérience, bonne ou mauvaise, de l'autre routeur mobile sur le nouveau point d'accès ou le nouveau réseau d'accès. L'utilisation de cette information peut être différée. En effet, l'autre routeur mobile peut mémoriser cette information et l'utiliser ultérieurement quand le besoin d'un transfert inter-point d'accès ou inter-réseau d'accès existera.

En outre, la notification relative à un événement détecté donné comprend une information relative à une cause ayant conduit audit comportement notifié.

Lorsque le routeur mobile a quitté un point d'accès, il peut ainsi indiquer à l'autre routeur mobile son expérience antérieure sur ce point d'accès, notamment la cause qui a conduit au comportement notifié. Il peut notifier un problème de charge, un problème d'attachement au point d'accès de durée trop courte, une bande passante trop faible, des échanges de signalisation trop longs, etc. L'autre routeur mobile peut ainsi prendre en compte cette cause dans son propre processus de décision.

Lorsque le routeur mobile a détecté un nouveau point d'accès, il peut notifier à l'autre routeur mobile une raison pour laquelle il ne s'y connecte pas.

De plus, la notification relative à un événement détecté donné comprend en outre des informations relatives audit au moins un réseau d'accès.

Les messages de notification comprennent également des informations relatives au réseau d'accès, par exemple le paramétrage radio d'un point d'accès sans fil du réseau d'accès. Ainsi, l'autre routeur mobile peut anticiper une connexion au nouveau point d'accès sans fil le cas échéant. Toujours à titre d'exemple, ils comprennent des informations relatives au nouveau réseau d'accès dans le cas d'un transfert inter-réseau d'accès. Ces informations transmises de façon anticipée à l'autre routeur mobile permettent de limiter un temps de coupure lors d'un transfert inter-point d'accès sans fil ou inter-réseau d'accès.

En outre, lesdits routeurs coordonnés en déplacement suivant un trajet prédéterminé au cours duquel il est prévu d'accéder à un nouveau point d'accès sans fil prédéfini, ledit routeur notifie ledit autre routeur de l'absence de détection dudit nouveau point d'accès sans fil.

Les routeurs coordonnés en déplacement selon un trajet prédéterminé s'attendent à rencontrer sur leurs trajets des points d'accès sans fil. La notification par le premier routeur mobile à au moins un autre routeur coordonné en déplacement, de l'absence de détection d'un point d'accès sans fil prédéfini, permet d'éviter à l'autre routeur de rechercher ce point d'accès. Ainsi, ils tirent parti de l'expérience du premier routeur mobile.

De plus, ledit évènement détecté appartient au groupe comportant une détection d'un nouveau point d'accès sans fil, une modification du point d'accès sans fil au meilleur niveau de réception, une détection d'un nouveau réseau d'accès, une absence de détection d'un point d'accès prédéfini, une déconnexion d'un point d'accès.

L'invention concerne en outre un routeur mobile, ledit routeur étant coordonné en déplacement avec au moins un autre routeur mobile, ledit routeur comprenant :
- des moyens de notification, agencés pour envoyer audit autre routeur une pluralité de notifications respectivement relatives à des événements successifs détectés par ledit routeur et relatifs à au moins un réseau d'accès, une notification relative à un événement détecté donné comprenant des informations représentatives dudit évènement détecté et des informations représentatives d'un comportement dudit routeur face à cet évènement, dans le but d'optimiser la connexion dudit autre routeur audit au moins un réseau d'accès considéré.

L'invention concerne également un routeur mobile, ledit routeur mobile étant coordonné en déplacement avec au moins un autre routeur, ledit routeur comprenant :
- des moyens de réception de notification, agencés pour recevoir une pluralité de notifications respectivement relatives à des évènements successifs détectés par ledit autre routeur et relatifs à au moins un réseau d'accès, une notification relative à un évènement détecté donné comprenant des informations représentatives dudit évènement détecté et des informations représentatives d'un comportement dudit autre routeur face à cet évènement ;
- des moyens de commande, agencés pour commander une action dudit routeur en fonction des informations notifiées reçues, dans le but d'optimiser la connexion dudit routeur audit au moins un réseau d'accès considéré.

L'invention concerne en outre un système comprenant une pluralité de routeurs mobiles, lesdits routeurs mobiles étant coordonnés en déplacement, comprenant au moins un routeur mobile comprenant des moyens de notification tel que décrit ci-dessus et au moins un routeur mobile comprenant des moyens de réception de notification et des moyens de commande tel que décrit ci-dessus.

L'invention concerne également un signal, émis par un routeur mobile à destination d'au moins un autre routeur mobile pour optimiser la connexion dudit autre routeur mobile à au moins un réseau d'accès, lesdits routeurs mobiles étant coordonnés en déplacement, ledit signal supportant une pluralité de notifications respectivement relatives à des évènements successifs détectés par ledit routeur et relatifs audit au moins un réseau d'accès, une notification relative à un évènement détecté donné comprenant des informations représentatives dudit évènement détecté et des informations représentatives d'un comportement dudit routeur face à cet évènement.

L'invention sera mieux comprise à l'aide de la description suivante d'un mode de réalisation particulier du procédé de l'invention, en référence aux dessins annexés sur lesquels :
- la figure 1 représente un ensemble de routeurs mobiles coordonnés en déplacement ;
- la figure 2 représente l'ensemble de routeurs mobiles se déplaçant dans un environnement radio ;
- la figure 3 représente les étapes du procédé selon un mode particulier de réalisation de l'invention ;
- la figure 4 représente un message de notification d'informations selon un mode particulier de réalisation de l'invention ;
- la figure 5a représente un schéma bloc fonctionnel d'un premier routeur mobile pour la mise en oeuvre du procédé de l'invention ;
- la figure 5b représente un schéma bloc fonctionnel d'un deuxième routeur mobile pour la mise en oeuvre du procédé de l'invention.

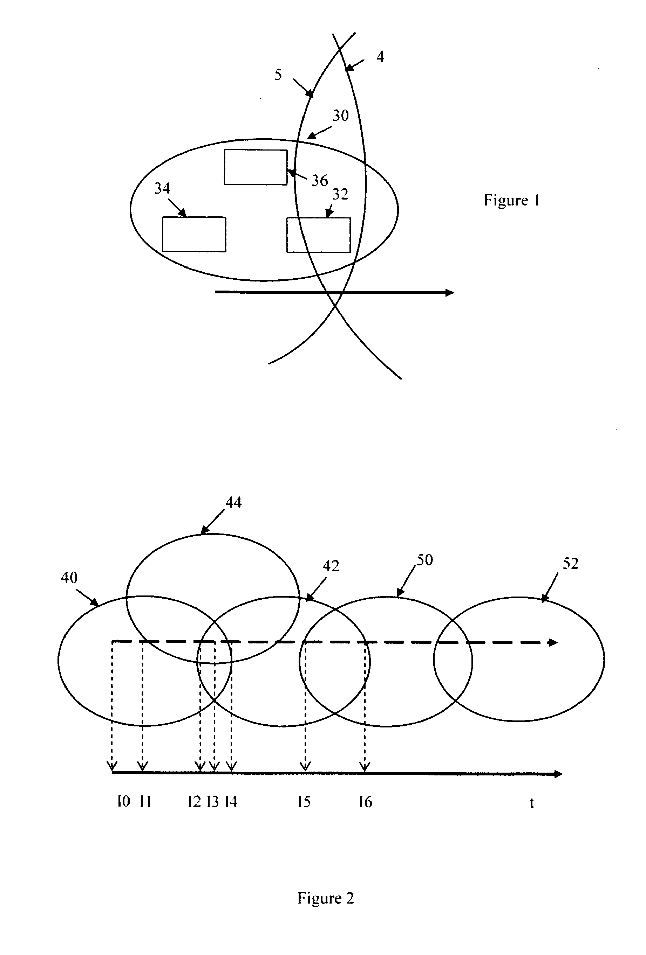

On a représenté sur la figure 1 une pluralité de routeurs mobiles 32, 34 et 36, regroupés dans un ensemble 30 de routeurs mobiles, les routeurs mobiles étant coordonnés en déplacement dans un environnement radio. Un routeur mobile 32, 34, 36 peut par exemple s'enregistrer au préalable dans l'ensemble 30 de routeurs mobiles. Une fois enregistré dans cet ensemble 30 de routeurs mobiles, les routeurs mobiles 32, 34, 36 sont aptes à communiquer entre eux. Le support physique de cette communication peut être de type filaire, sans fil ou tout autre moyen.

Deux zones desservies par deux réseaux d'accès référencés 4 et 5 sont représentées sur la figure 1.

Sur la figure 2, on a représenté une pluralité de zones couvertes par des points d'accès sans fil. Afin de simplifier la description, on note par la même référence un point d'accès sans fil et la zone, dite zone de couverture, desservie par ce point d'accès. Ainsi, sur la figure 2, sont représentés trois zones de couverture référencées 40, 42, 44 desservies par des points d'accès sans fil appartenant à un réseau d'accès 4 et deux zones de couverture 50 et 52 desservies par des points d'accès sans fil appartenant à un réseau d'accès 5.

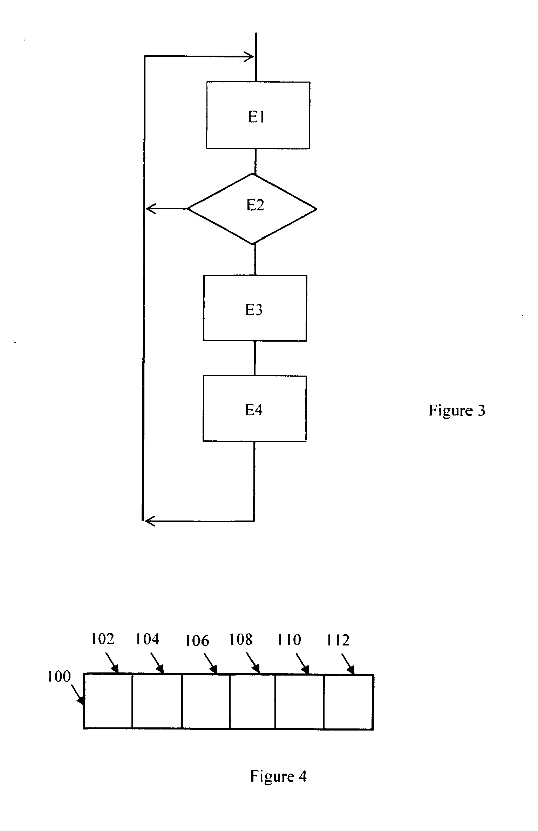

Un message 100 de notification d'informations envoyé par un routeur mobile à un autre routeur mobile coordonné en déplacement selon l'invention est représenté sur la figure 4. Il comprend une pluralité de champs, ces champs permettant de notifier à un autre routeur un évènement relatif à au moins un réseau d'accès détecté par le routeur et des informations représentatives d'un comportement du routeur face à cet évènement.

Le message 100 peut comprendre notamment :
- un champ 102 d'entête, représentatif d'un type de message de notification ;
- un champ 104 d'action, comprenant un comportement du routeur face à un évènement détecté ;
- un champ 106 d'identité de l'entité pour laquelle l'évènement a été détecté ;
- un champ 108 de cause, comprenant une cause ayant conduit au comportement notifié ;
- un champ 110 d'informations, comprenant des informations relatives à l'entité indiquée dans le champ 106 ;
- un champ 112 d'horodatage, comprenant une information temporelle relative à l'instant de détection de l'évènement.

Selon un mode particulier de réalisation, le champ 102 d'entête du message 100 de notification contient les valeurs suivantes :
- NET_MEETING, correspondant au type de message de notification envoyé lorsque le routeur rencontre un nouveau réseau d'accès ; ce message permet de notifier à un autre routeur un évènement tel qu'une détection d'un nouveau réseau d'accès ;
- NET_LEAVING, correspondant au type de message de notification envoyé lorsque le routeur est déconnecté d'un réseau d'accès ;
- ON_NET, correspondant au type de message de notification envoyé lorsque le routeur notifie à un autre routeur un évènement relatif à un réseau d'accès détecté ; ce message permet de notifier à un autre routeur des évènements tels qu'une modification du point d'accès sans fil au meilleur niveau de réception, une absence de détection d'un point d'accès prédéfini, une détection d'un nouveau point d'accès sans fil, une déconnexion d'un point d'accès.

Le champ 104 d'action comprend un comportement du routeur face à l'évènement détecté et relatif à l'entité indiquée dans le champ 106 d'identité. A titre d'exemples non limitatifs, le routeur peut avoir décidé de se connecter au point d'accès, de se déconnecter du point d'accès, de s'authentifier sur le réseau d'accès auquel appartient le point d'accès.

Le champ 108 de cause comprend une information représentative de la cause ayant conduit le routeur au comportement notifié. A titre d'exemples non limitatifs, le routeur peut notifier un problème de charge du point d'accès, un attachement au point d'accès d'une durée trop faible, une bande passante trop faible, des échanges de signalisation trop longs, un niveau de réception insuffisant, un meilleur niveau de réception, un niveau faible, etc.

Le champ 110 de paramètres comprend des informations relatives au point d'accès ou au réseau d'accès faisant l'objet de la notification. A titre d'exemples non limitatifs, il permet de notifier par exemple que :
- un point d'accès aurait dû être détecté et que cela n'a pas été le cas,
- un point d'accès ou un réseau d'accès vient d'être détecté,
- un réseau d'accès détecté est un réseau connu du routeur,
- le type d'authentification utilisé sur ce réseau d'accès,
- l'opérateur du réseau d'accès,
- des informations relatives au paramétrage du point d'accès telles que la technologie du point d'accès sans fil et la bande passante estimée du point d'accès sans fil,
- des informations acquises par le routeur relatives au réseau d'accès, en particulier, le groupe d'adresses réseau utilisables sur un routeur d'accès auquel est raccordé le point d'accès sans fil dans le réseau d'accès, etc.

L'utilisation des messages sera mieux comprise dans le cadre de l'exemple particulier d'environnement radio tel que représenté à la figure 2. Le déplacement de l'ensemble 30 de routeurs mobiles est matérialisé sur la figure 2 par une flèche en pointillés.

A l'instant initial 10, le routeur 32 est connecté au réseau d'accès 4 par l'intermédiaire du point d'accès 40.

A l'instant I1, le routeur 32 détecte le point d'accès 44 appartenant également au réseau d'accès 4.

Il notifie aux autres routeurs 34 et 36 par l'envoi d'un message M1 de type ON_NET indiquant :
- dans le champ 104 d'action la valeur « nulle », c'est-à-dire qu'il n'a rien entrepris suite à la détection du point d'accès 44,
- dans le champ 106 l'identité du point d'accès 44,
- dans le champ 108 une valeur indiquant une bande passante trop faible,
- dans le champ 110 des informations relatives au point d'accès, notamment que le point d'accès 44 vient d'être détecté.

A l'instant 12, le routeur 32 détecte le point d'accès 42 appartenant également au réseau d'accès 4. Il notifie les routeurs 34 et 36 par l'envoi d'un message M2 de type ON_NET équivalent au message M1 mais indiquant l'identité du point d'accès 42 et dans le champ 108 un niveau de réception faible.

A l'instant 13, le routeur 32 détecte que le niveau de réception du point d'accès 42 est meilleur que celui du point d'accès 40. Il décide donc de se connecter au point d'accès 42. Il notifie les routeurs 34 et 36 par l'envoi d'un message M3 de type ON_NET indiquant :
- dans le champ 104 d'action la valeur « handoff », indiquant l'établissement d'une connexion au point d'accès 42,
- dans le champ 106 l'identité du point d'accès 42 et dans le champ 110 des informations relatives au point d'accès.

A l'instant 14, le routeur 32 détecte qu'il ne reçoit plus suffisamment le point d'accès 40. Il notifie les routeurs 34 et 36 par l'envoi d'un message M4 de type ON_NET indiquant en particulier dans le champ 104 la valeur « handon » indiquant qu'il est déconnecté du point d'accès 40 et dans le champ 108 de cause la valeur « niveau de réception trop faible ».

A l'instant 15, le routeur 32 détecte le point d'accès 50 qui appartient au réseau d'accès 5. Il notifie les routeurs 34 et 36 par un message M5 équivalent au message M1. Lorsque le niveau de réception du point d'accès 50 devient suffisant, il notifie les routeurs 34 et 36 par un message M5' indiquant qu'il se connecte au point d'accès 50. Une fois connecté au niveau radio, il notifie les deux routeurs par l'envoi d'un message M5" de type NET_MEETING indiquant qu'il se connecte au réseau d'accès 5 et transmet en particulier aux autres routeurs 34 et 36 les paramètres réseau utilisés sur le réseau d'accès 5.

A l'instant 16, le niveau de réception du point d'accès 42 devenant trop faible, le routeur 32 notifie successivement les deux routeurs par l'envoi d'un premier message M6 de type ON_NET indiquant qu'il est déconnecté du point d'accès 42 et d'un deuxième message M6' de type NET_LEAVING indiquant qu'il est déconnecté du réseau d'accès 4.

Le routeur 32 envoie donc aux autres routeurs, coordonnés en déplacement, une pluralité de notifications respectivement relatives à des événements successifs qu'il a détectés et relatifs à au moins un réseau d'accès, une notification relative à un événement détecté donné comprenant des informations représentatives de l'évènement détecté et des informations représentatives d'un comportement du routeur 32 face à cet évènement. Ces messages et leur contenu aident les autres routeurs mobiles 34 et 36 à prendre une décision pour l'optimisation de leur connexion à un réseau d'accès. Les évènements sont relatifs à au moins un réseau d'accès et sont détectés pour un point d'accès dans le réseau d'accès ou pour le réseau d'accès.

Les routeurs 34 et 36 sont par exemple informés à l'instant I1 qu'il n'est pas nécessaire d'essayer de se connecter au point d'accès 44 du fait d'une bande passante trop faible. Ils sont informés de façon anticipée des détections prochaines des points d'accès 42 et 50 et obtiennent également des paramètres qui leur permettent de limiter le temps nécessaire pour une éventuelle connexion.

Dans un mode particulier de réalisation, l'ensemble 30 de routeurs suit un trajet prédéterminé au cours duquel il est prévu d'accéder à un nouveau point d'accès sans fil prédéfini. Le routeur notifie les autres routeurs de l'absence de détection du nouveau point d'accès sans fil, le cas échéant. Cela permet d'éviter aux autres routeurs 34 et 36 de tenter de se connecter à ce point d'accès. Ainsi, ils tirent parti de l'expérience du routeur 32.

En variante, l'ensemble 30 des routeurs mobiles est chaîné selon l'ordre suivant : le routeur 32, puis le routeur 34 et enfin le routeur 36. Le routeur 32 envoie des notifications successives au routeur 34, qui les retransmet au routeur 36 avec ses propres notifications successives. Ainsi, le routeur 36 tire parti de l'expérience des deux routeurs précédents.

Le procédé de collaboration entre un routeur mobile 32 et un autre routeur mobile 34, les routeurs mobiles étant coordonnés en déplacement, pour optimiser la connexion de l'autre routeur à au moins un réseau d'accès va maintenant être décrit en relation avec la figure 3.

Dans une étape E1, le routeur mobile 32 est en attente de détection d'un évènement.

A l'étape E2, le routeur mobile 32 effectue un test afin de vérifier si un évènement a été détecté. Si ce n'est pas le cas, le procédé retourne à l'étape E1, sinon, il passe à l'étape E3.

A l'étape E3, le routeur mobile 32 identifie l'évènement détecté et décide de son comportement face à cet évènement détecté. Les critères de décision du comportement sont propres à chaque routeur.

Le cas échéant, il identifie également une cause ayant conduit à la décision de ce comportement.

Dans une étape E4, il envoie au routeur mobile 34 une notification 100 relative à l'événement détecté donné comprenant des informations représentatives de l'évènement détecté et des informations représentatives de son comportement face à cet évènement. Le cas échéant, la notification comprend une cause ayant conduit à ce comportement. Puis le routeur mobile 32 retourne à l'étape E1 d'attente de détection d'un évènement.

Le routeur mobile 34 reçoit ainsi une pluralité de notifications lui permettant de commander une action notamment en fonction des informations notifiées reçues, dans le but d'optimiser sa connexion dans l'environnement radio. Il prend également en compte ses propres informations liées à l'environnement radio et au réseau. L'utilisation d'une information notifiée peut être différée. En effet, le routeur mobile 34 peut mémoriser cette information accompagnée de son horodatage et l'utiliser ultérieurement par exemple quand le besoin d'un transfert inter-point d'accès existera.

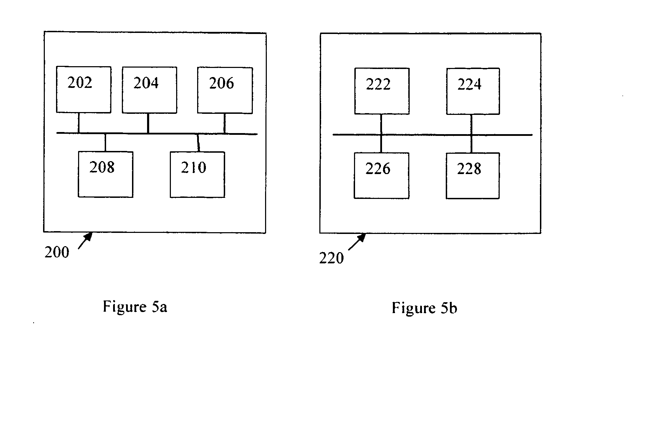

La figure 5a représente un schéma bloc fonctionnel d'un premier routeur mobile pour la mise en oeuvre du procédé de l'invention.

Le premier routeur 200 mobile, coordonné en déplacement avec au moins un autre routeur 220 mobile, comprend :
- des moyens 202 de détection de points d'accès sans fil, agencés pour détecter des points d'accès sans fil et mesurer un niveau de réception ;
- des moyens 204 de détection d'évènements en fonction d'informations fournies par les moyens 202 de détection de points d'accès sans fil ;
- des moyens 206 de décision d'un comportement face à un événement détecté par les moyens 204 de détection d'évènements ;
- des moyens 208 de communication avec au moins un autre routeur mobile coordonné en déplacement ;
- des moyens 210 de notification, agencés pour envoyer à un autre routeur par l'intermédiaire des moyens 208 de communication une pluralité de notifications M1-M7 respectivement relatives à des événements successifs détectés par les moyens 204 de détection et relatifs à au moins un réseau d'accès 4,5, une notification 100 relative à un événement détecté donné comprenant des informations 102 représentatives de l'évènement détecté et des informations 104 représentatives d'un comportement décidé par les moyens 206 de décision face à cet évènement, dans le but d'optimiser la connexion de l'autre routeur au réseau d'accès considéré.

Les moyens 208 de communication peuvent être de type filaire, sans fil ou tout autre moyen.

Les moyens 202 de détection de points d'accès sans fil peuvent être conformes à différentes technologies d'accès sans fil, telles que 802.11g, 812.16, GSM, UMTS, etc. Un routeur mobile 200 peut supporter une pluralité de technologies par l'intermédiaire d'une pluralité de moyens 202 de détection de points d'accès sans fil.

La figure 5b représente un schéma bloc fonctionnel d'un deuxième routeur 220 mobile pour la mise en oeuvre du procédé de l'invention.

Un deuxième routeur mobile 220, coordonné en déplacement avec au moins un premier routeur 200 comprend :
- des moyens 222 de détection de points d'accès sans fil, agencés pour détecter des points d'accès sans fil et mesurer un niveau de réception ;
- des moyens 224 de communication avec au moins un autre routeur mobile coordonné en déplacement ;
- des moyens 226 de réception de notification, agencés pour recevoir une pluralité de notifications M1-M7 respectivement relatives à des évènements successifs détectés par le premier routeur et relatifs à au moins un réseau d'accès, une notification relative à un évènement détecté donné comprenant des informations représentatives dudit évènement détecté et des informations représentatives d'un comportement du premier routeur face à cet évènement ;
- des moyens 228 de commande, agencés pour commander une action du routeur en fonction des informations notifiées reçues par les moyens 226 de réception de notifications, dans le but d'optimiser sa connexion au réseau d'accès considéré.

Les moyens 224 de communication peuvent être de type filaire, sans fil ou tout autre moyen.

Les moyens 222 de détection de points d'accès sans fil peuvent être conformes à différentes technologies d'accès sans fil, telles que 802.11 g, 812.16, GSM, UMTS, etc. Un routeur mobile 220 peut supporter une pluralité de technologies par l'intermédiaire d'une pluralité de moyens 222 de détection de points d'accès sans fil.

Les modules 204, 206 et 210 qui mettent en oeuvre le procédé précédemment décrit, sont de préférence des modules logiciels comprenant des instructions logicielles pour faire exécuter les étapes du procédé précédemment décrit par le routeur 200.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un ensemble 30 de routeurs mobiles comprenant une pluralité de routeurs mobiles 32, 34, 36 coordonnés en déplacement, comprenant :
- au moins un premier routeur 200 mobile tel que décrit ci-dessus ;
- au moins un deuxième routeur 220 mobile tel que décrit ci-dessus.

## Revendications

1. Procédé de collaboration entre un routeur mobile (32) et au moins un autre routeur mobile (34, 36), lesdits routeurs mobiles étant coordonnés en déplacement, pour optimiser la connexion de l'autre routeur (34, 36) à au moins un réseau d'accès (4,5) en prenant en compte l'expérience dudit routeur (32) sur la connexion audit réseau d'accès (4,5),
ledit procédé comprenant l'envoi (E4) audit autre routeur (34, 36) par ledit routeur (32) d'une pluralité de notifications (M1-M7) respectivement relatives à des événements successifs détectés par ledit routeur et relatifs audit au moins un réseau d'accès, une notification (100) relative à un événement détecté donné comprenant des informations (102; 106, 108, 110) représentatives dudit évènement détecté et des informations représentatives d'un comportement (104) dudit routeur face à cet évènement,
**caractérisé en ce que** ledit autre routeur (34, 36) se connecte, ou évite de se connecter, audit réseau d'accès (4,5) en fonction desdites informations notifiées.

2. Procédé selon la revendication 1, dans lequel la notification relative à un événement détecté donné comprend en outre une information (108) relative à une cause ayant conduit audit comportement notifié.

3. Procédé selon l'une quelconque des revendications précédentes, dans lequel la notification relative à un événement détecté donné comprend en outre des informations (110) relatives audit au moins un réseau d'accès.

4. Procédé selon l'une quelconque des revendications précédentes, dans lequel, lesdits routeurs coordonnés en déplacement suivant un trajet prédéterminé au cours duquel il est prévu d'accéder à un nouveau point d'accès sans fil prédéfini, ledit routeur notifie ledit autre routeur de l'absence de détection dudit nouveau point d'accès sans fil.

5. Procédé selon l'une quelconque des revendications précédentes, dans lequel ledit évènement détecté appartient au groupe comportant une détection d'un nouveau point d'accès sans fil, une modification du point d'accès sans fil au meilleur niveau de réception, une détection d'un nouveau réseau d'accès, une absence de détection d'un point d'accès prédéfini, une déconnexion d'un point d'accès.

6. Routeur (200) mobile, ledit routeur étant coordonné en déplacement avec au moins un autre routeur (220) mobile, ledit routeur comprenant :
- des moyens (210) de notification, agencés pour envoyer audit autre routeur une pluralité de notifications (M1-M7) respectivement relatives à des événements successifs détectés par ledit routeur et relatifs à au moins un réseau d'accès (4,5), une notification (100) relative à un événement détecté donné comprenant des informations (102, 106, 108, 110) représentatives dudit évènement détecté et des informations (104) représentatives d'un comportement dudit routeur face à cet évènement,
**caractérisé en ce que** lesdites informations notifiées sont de nature à permettre audit autre routeur (220) de se connecter, ou d'éviter de se connecter, audit réseau d'accès (4,5), dans le but d'optimiser la connexion dudit autre routeur audit au moins un réseau d'accès considéré (4,5) en prenant en compte l'expérience dudit routeur (200) sur la connexion audit réseau d'accès.

7. Routeur mobile (220), ledit routeur mobile étant coordonné en déplacement avec au moins un autre routeur (200), ledit routeur comprenant :
- des moyens (226) de réception de notification, agencés pour recevoir une pluralité de notifications (M1-M7) respectivement relatives à des évènements successifs détectés par ledit autre routeur et relatifs à au moins un réseau d'accès (4,5), une notification relative à un évènement détecté donné comprenant des informations représentatives dudit évènement détecté et des informations représentatives d'un comportement dudit autre routeur (200) face à cet évènement ; et
- des moyens (228) de commande, agencés pour commander une action dudit routeur (220 en fonction des informations notifiées reçues, dans le but d'optimiser la connexion dudit routeur (220) audit au moins un réseau d'accès considéré en prenant en compte l'expérience dudit autre routeur (200) sur la connexion audit réseau d'accès (4,5), **caractérisé en ce que** lesdites actions comprennent le fait de se connecter, ou d'éviter de se connecter, audit réseau d'accès (4,5).

8. Système (30) comprenant une pluralité de routeurs mobiles (32, 34, 36), lesdits routeurs mobiles étant coordonnés en déplacement, comprenant :
- au moins un routeur mobile selon la revendication 6 ;
- au moins un routeur mobile selon la revendication 7.

9. Programme de collaboration entre un routeur (32) mobile et au moins un autre routeur (34, 36) mobile, lesdits routeurs mobiles étant coordonnés en déplacement, pour optimiser la connexion dudit autre routeur à au moins un réseau d'accès (4, 5), pour un routeur mobile, comprenant des instructions de programme destinées à commander l'exécution des étapes du procédé selon l'une quelconque des revendications 1 à 5 lorsque ledit programme est exécuté par ledit routeur.

10. Support d'enregistrement lisible par un routeur mobile sur lequel est enregistré le programme selon la revendication 9.

11. Signal, émis par un routeur mobile (32) à destination d'au moins un autre routeur mobile (34, 36) pour optimiser la connexion dudit autre routeur mobile (34, 36) à au moins un réseau d'accès (4,5) en prenant en compte l'expérience dudit routeur (32) sur la connexion audit réseau d'accès (4,5), lesdits routeurs mobiles étant coordonnés en déplacement, ledit signal supportant une pluralité de notifications (M1-M7) respectivement relatives à des évènements successifs détectés par ledit routeur et relatifs audit au moins un réseau d'accès, une notification (100) relative à un évènement détecté donné comprenant des informations (102) représentatives dudit évènement détecté et des informations (104) représentatives d'un comportement dudit routeur face à cet évènement,
**caractérisé en ce que** lesdites informations notifiées sont de nature à permettre audit autre routeur (34, 36) de se connecter, ou d'éviter de se connecter, audit réseau d'accès (4,5).

## Claims

1. Method of collaboration between a mobile router (32) and at least one other mobile router (34, 36), said mobile routers being coordinated in displacement, so as to optimize the connection of the other router (34, 36) to at least one access network (4, 5) while taking account of the experience of said router (32) regarding the connection to said access network (4, 5),
said method comprising the dispatching (E4) to said other router (34, 36) by said router (32) of a plurality of notifications (M1-M7) respectively relating to successive events detected by said router and relating to said at least one access network, a notification (100) relating to a given detected event comprising information items (102; 106, 108, 110) representative of said detected event and information items representative of a behaviour (104) of said router faced with this event,
**characterized in that** said other router (34, 36) connects, or avoids connecting, to said access network (4, 5) as a function of said notified information items.

2. Method according to Claim 1, in which the notification relating to a given detected event furthermore comprises an information item (108) relating to a cause that led to said notified behaviour.

3. Method according to any one of the preceding claims, in which the notification relating to a given detected event furthermore comprises information items (110) relating to said at least one access network.

4. Method according to any one of the preceding claims, in which, said routers coordinated in displacement following a predetermined path in the course of which provision is made to access a new predefined wireless access point, said router notifies said other router of the absence of detection of said new wireless access point.

5. Method according to any one of the preceding claims, in which said detected event belongs to the group comprising a detection of a new wireless access point, a change of wireless access point having the best reception level, a detection of a new access network, an absence of detection of a predefined access point, a disconnection of an access point.

6. Mobile router (200), said router being coordinated in displacement with at least one other mobile router (220), said router comprising:
- notification means (210), designed to dispatch to said other router a plurality of notifications (M1-M7) respectively relating to successive events detected by said router and relating to at least one access network (4, 5), a notification (100) relating to a given detected event comprising information items (102, 106, 108, 110) representative of said detected event and information items (104) representative of a behaviour of said router faced with this event,
**characterized in that** said notified information items are of a nature as to allow said other router (220) to connect, or to avoid connecting, to said access network (4, 5), with the aim of optimizing the connection of said other router to said at least one access network considered (4, 5) while taking account of the experience of said router (200) regarding the connection to said access network.

7. Mobile router (220), said mobile router being coordinated in displacement with at least one other router (200), said router comprising:
- notification reception means (226), designed to receive a plurality of notifications (M1-M7) respectively relating to successive events detected by said other router and relating to at least one access network (4, 5), a notification relating to a given detected event comprising information items representative of said detected event and information items representative of a behaviour of said other router (200) faced with this event; and
- control means (228), designed to control an action of said router (220) as a function of the notified information items received, with the aim of optimizing the connection of said router (220) to said at least one considered access network while taking account of the experience of said other router (200) regarding the connection to said access network (4, 5),
**characterized in that** said actions comprise the act of connecting, or of avoiding connecting, to said access network (4, 5).

8. System (30) comprising a plurality of mobile routers (32, 34, 36), said mobile routers being coordinated in displacement, comprising:
- at least one mobile router according to Claim 6;
- at least one mobile router according to Claim 7.

9. Program for collaboration between a mobile router (32) and at least one other mobile router (34, 36), said mobile routers being coordinated in displacement, so as to optimize the connection of said other router to at least one access network (4, 5), for a mobile router, comprising program instructions intended to control the execution of the steps of the method according to any one of Claims 1 to 5 when said program is executed by said router.

10. Recording medium readable by a mobile router on which the program according to Claim 9 is recorded.

11. Signal, emitted by a mobile router (32) destined for at least one other mobile router (34, 36) so as to optimize the connection of said other mobile router (34, 36) to at least one access network (4, 5) while taking account of the experience of said router (32) regarding the connection to said access network (4, 5), said mobile routers being coordinated in displacement, said signal supporting a plurality of notifications (M1-M7) respectively relating to successive events detected by said router and relating to said at least one access network, a notification (100) relating to a given detected event comprising information items (102) representative of said detected event and information items (104) representative of a behaviour of said router faced with this event,
**characterized in that** said notified information items are of a nature as to allow said other router (34, 36) to connect, or to avoid connecting, to said access network (4, 5).

## Patentansprüche

1. Verfahren zur Zusammenarbeit zwischen einem mobilen Router (32) und mindestens einem anderen mobilen Router (34, 36), wobei die mobilen Router bewegungskoordiniert sind, um die Verbindung des anderen Routers (34, 36) mit mindestens einem Zugriffsnetz (4, 5) zu optimieren, indem die Erfahrung des Routers (32) bei der Verbindung mit dem Zugriffsnetz (4, 5) berücksichtigt wird,
wobei das Verfahren das Senden (E4) an den anderen Router (34, 36) durch den Router (32) einer Vielzahl von Mitteilungen (M1-M7) enthält, die sich je auf von dem Router erfasste aufeinanderfolgende Ereignisse und auf das mindestens eine Zugriffsnetz beziehen, wobei eine sich auf ein gegebenes erfasstes Ereignis beziehende Mitteilung (100) für das erfasste Ereignis repräsentative Informationen (102; 106, 108, 110) und für ein Verhalten (104) des Routers gegenüber diesem Ereignis repräsentative Informationen enthält,
**dadurch gekennzeichnet, dass** der andere Router (34, 36) sich abhängig von den mitgeteilten Informationen mit dem Zugriffsnetz (4, 5) verbindet oder die Verbindung vermeidet.

2. Verfahren nach Anspruch 1, bei dem die Mitteilung bezüglich eines gegebenen erfassten Ereignisses außerdem eine Information (108) bezüglich einer Ursache enthält, die zu dem mitgeteilten Verhalten geführt hat.

3. Verfahren nach einem der vorhergehenden Ansprüche, bei dem die Mitteilung bezüglich eines gegebenen erfassten Ereignisses außerdem Informationen (110) bezüglich des mindestens einen Zugriffsnetzes enthält.

4. Verfahren nach einem der vorhergehenden Ansprüche, bei dem, wenn die bewegungskoordinierten Router einer vorbestimmten Strecke folgen, auf der vorgesehen ist, auf einen neuen vordefinierten drahtlosen Zugriffspunkt zuzugreifen, der Router dem anderen Router die nicht vorhandene Erfassung des neuen drahtlosen Zugriffspunkts mitteilt.

5. Verfahren nach einem der vorhergehenden Ansprüche, bei dem das erfasste Ereignis zu der Gruppe gehört, die eine Erfassung eines neuen drahtlosen Zugriffspunkts, eine Änderung des drahtlosen Zugriffspunkts mit dem besten Empfangspegel, eine Erfassung eines neuen Zugriffsnetzes, eine nicht vorhandene Erfassung eines vordefinierten Zugriffspunkts, ein Abschalten eines Zugriffspunkts enthält.

6. Mobiler Router (200), wobei der Router mit mindestens einem anderen mobilen Router (220) bewegungskoordiniert ist, wobei der Router enthält:
- Mitteilungseinrichtungen (210), die eingerichtet sind, um an den anderen Router eine Vielzahl von Mitteilungen (M1-M7) zu senden, die sich je auf vom Router erfasste und sich auf mindestens ein Zugriffsnetz (4, 5) beziehende aufeinanderfolgende Ereignisse beziehen, wobei eine Mitteilung (100) bezüglich eines gegebenen erfassten Ereignisses für dieses erfasste Ereignis repräsentative Informationen (102, 106, 108, 110) und Informationen (104) enthält, die für ein Verhalten des Routers gegenüber diesem Ereignis repräsentativ sind,
**dadurch gekennzeichnet, dass** die mitgeteilten Informationen von der Art sind, dass sie es dem anderen Router (220) erlauben, sich mit dem Zugriffsnetz (4, 5) zu verbinden oder zu vermeiden, sich mit ihm zu verbinden, um die Verbindung des anderen Routers mit dem mindestens einen betrachteten Zugriffsnetz (4, 5) unter Berücksichtigung der Erfahrung des Routers (200) mit der Verbindung mit dem Zugriffsnetz zu optimieren.

7. Mobiler Router (220), wobei der mobile Router mit mindestens einem anderen Router (200) bewegungskoordiniert ist, wobei der Router enthält:
- Einrichtungen (226) zum Mitteilungsempfang, die eingerichtet sind, um eine Vielzahl von Mitteilungen (M1-M7) zu empfangen, die sich je auf von dem anderen Router erfasste und sich auf mindestens ein Zugriffsnetz (4, 5) beziehende aufeinanderfolgende Ereignisse beziehen, wobei eine Mitteilung bezüglich eines gegebenen erfassten Ereignisses für das erfasste Ereignis repräsentative Informationen und Informationen enthält, die für ein Verhalten des anderen Routers (200) gegenüber diesem Ereignis repräsentativ sind; und
- Steuereinrichtungen (228), die eingerichtet sind, um eine Aktion des Routers (220) abhängig von den empfangenen mitgeteilten Informationen zu steuern, um die Verbindung des Routers (220) mit dem mindestens einen betrachteten Zugriffsnetz unter Berücksichtigung der Erfahrung des anderen Routers (200) mit der Verbindung mit dem Zugriffsnetz (4, 5) zu optimieren,
**dadurch gekennzeichnet, dass** die Aktionen die Tatsache enthalten, sich mit dem Zugriffsnetz (4, 5) zu verbinden oder die Verbindung zu vermeiden.

8. System (30), das eine Vielzahl von mobilen Routern (32, 34, 36) enthält, wobei die mobilen Router bewegungskoordiniert sind, das enthält:
- mindestens einen mobilen Router nach Anspruch 6;
- mindestens einen mobilen Router nach Anspruch 7.

9. Programm zur Zusammenarbeit zwischen einem mobilen Router (32) und mindestens einem anderen mobilen Router (34, 36), wobei die mobilen Router bewegungskoordiniert sind, um die Verbindung des anderen Routers mit mindestens einem Zugriffsnetz (4, 5) für einen mobilen Router zu optimieren, das Programmanweisungen enthält, die dazu bestimmt sind, die Ausführung der Schritte des Verfahrens nach einem der Ansprüche 1 bis 5 zu steuern, wenn das Programm von dem Router ausgeführt wird.

10. Aufzeichnungsträger, der von einem mobilen Router lesbar ist, auf dem das Programm nach Anspruch 9 aufgezeichnet ist.

11. Signal, das von einem mobilen Router (32) an mindestens einen anderen mobilen Router (34, 36) gesendet wird, um die Verbindung des anderen mobilen Routers (34, 36) mit mindestens einem Zugriffsnetz (4, 5) unter Berücksichtigung der Erfahrung des Routers (32) mit der Verbindung mit dem Zugriffsnetz (4, 5) zu optimieren, wobei die mobilen Router bewegungskoordiniert sind, wobei das Signal eine Vielzahl von Mitteilungen (M1-M7) unterstützt, die sich je auf vom Router erfasste aufeinanderfolgende und sich auf das mindestens eine Zugriffsnetz beziehende Ereignisse beziehen, wobei eine Mitteilung (100) bezüglich eines gegebenen erfassten Ereignisses für dieses erfasste Ereignis repräsentative Informationen (102) und Informationen (104) enthält, die für ein Verhalten des Routers gegenüber diesem Ereignis repräsentativ sind,
**dadurch gekennzeichnet, dass** die mitgeteilten Informationen von einer Art sind, die es dem anderen Router (34, 36) erlaubt, sich mit dem Zugriffsnetz (4, 5) zu verbinden oder die Verbindung zu vermeiden.
